(19) Europäisches Patentamt

European Patent Office

Office européen des brevets

(11) EP 4 570 057 A1

## (12) EUROPEAN PATENT APPLICATION

(43) Date of publication:
18.06.2025 Bulletin 2025/25

(21) Application number: 24218827.4

(22) Date of filing: 10.12.2024

(51) International Patent Classification (IPC):
**A01D 89/00** (2006.01)

(52) Cooperative Patent Classification (CPC):
**A01D 89/005**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 11.12.2023 US 202363608362 P

(71) Applicant: **CNH Industrial America LLC
New Holland, PA 17557 (US)**

(72) Inventors:
• **Todderud, Stephen
New Holland, 17557 (US)**
• **Hunt, Cory
New Holland, 17557 (US)**
• **O'Neal, Shawn
New Holland, 17557 (US)**
• **Linde, Karl
New Holland, 17557 (US)**

(74) Representative: **CNH Industrial IP Department
Leon Claeysstraat 3A
8210 Zedelgem (BE)**

## (54) VARIABLE SPEED PICKUP FOR ROUND BALER

(57) An agricultural baler (10) includes a pickup unit (16) having a rotatable reel (18) for introducing crop material into a baling chamber (22) of the baler (10). A variable speed drive system (200) rotates the reel (18).

FIG. 1

**Description**

**FIELD OF THE INVENTION**

The present invention relates to agricultural balers, and, more particularly, to a round baler, and even more particularly to a system for controlling a pickup of the baler.

**BACKGROUND OF THE INVENTION**

As is described in U.S. Patent No. 11,612,108, agricultural harvesting machines, such as balers, are used to consolidate and package crop material so as to facilitate the storage and handling of the crop material for later use. In the case of hay or silage, a mower-conditioner is typically used to cut and condition the crop material. In the case of straw, an agricultural combine discharges non-grain crop material from the rear of the combine defining the straw (such as wheat or oat straw) which is to be picked up by the baler. The cut crop material is typically raked into a windrow, and a baler, such as a large square baler or round baler, straddles the windrows and travels along the windrows to pick up the crop material and form it into bales.

A round baler may generally include a frame supported by wheels, a hydraulic system, a pickup unit to engage and lift the crop material into the baler, a cutting unit, a main bale chamber for forming a bale, and a wrapping mechanism for wrapping or tying a material around the bale after it has been formed in the main bale chamber. As the baler is towed (or moved) over a windrow, the pickup unit lifts the crop material into the baler. Thereafter, the crop material may be cut into smaller pieces by the cutting unit. As the crop material enters the main bale chamber, multiple carrier elements, e.g. rollers, chains and slats, and/or belts, will begin to roll a bale of hay within the chamber. These carrier elements may be movable so that the chamber can initially contract and subsequently expand to maintain an appropriate amount of pressure on the periphery of the bale. The size of the bale chamber may be variable, as described above, or the size of the bale chamber may be fixed. After the bale is formed and wrapped by the wrapping mechanism, the rear of the baler is configured to open for allowing the bale to be discharged onto the field.

Most round balers are towed by a tractor or other vehicle, and those round balers receive power from a power take-off (PTO) shaft extending from the tractor. In such an arrangement, the pickup unit rotates a constant speed due to its connection to the PTO shaft. It would be desirable to operate the pickup unit (and/or other components of the baler) using a variable source of power in the interest of efficiency (e.g., fuel, time and crop feedrate), controlling the shape of the bale, estimating the crop throughput of the baler, and more.

**SUMMARY OF THE INVENTION**

According to one aspect, an agricultural baler includes a pickup unit having a rotatable reel for introducing crop material into a baling chamber of the baler. A variable speed drive system rotates the reel.

**BRIEF DESCRIPTION OF THE DRAWINGS**

The above-mentioned and other features and advantages of this invention, and the manner of attaining them, will become more apparent and the invention will be better understood by reference to the following description of embodiments of the invention taken in conjunction with the accompanying drawings, wherein:

FIG. 1 illustrates a side cross-sectional view of an agricultural round baler, in accordance with an exemplary embodiment of the present invention.

FIG. 2 depicts a schematic of a variable speed drive system for powering the pickup unit of the baler of FIG. 1.

FIG. 3 depicts a schematic of another variable speed drive system for powering the pickup unit of the baler of FIG. 1.

FIG. 4 depicts a schematic of yet another variable speed drive system for powering the pickup unit of the baler of FIG. 1.

Corresponding reference characters indicate corresponding parts throughout the several views. The exemplifications set out herein illustrate embodiments of the invention and such exemplifications are not to be construed as limiting the scope of the invention in any manner.

## DETAILED DESCRIPTION OF THE INVENTION

The terms "forward", "rearward", "left" and "right", when used in connection with the agricultural baler and/or components thereof are usually determined with reference to the direction of forward operative travel of the towing vehicle, but they should not be construed as limiting. The terms "longitudinal" and "transverse" are determined with reference to the fore-and-aft direction of the towing vehicle and are equally not to be construed as limiting. The terms "connected," "coupled" and variants thereof refer to either direct or indirect connections.

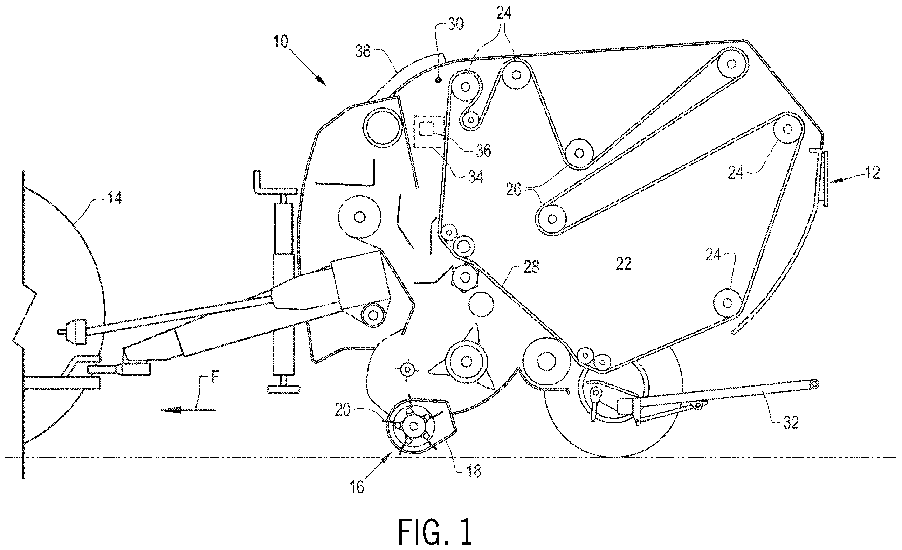

Referring now to the drawings, and more particularly to FIG. 1, there is shown a cross-sectional, side view of a round baler 10 which may be towed by a vehicle 14 in a forward direction of travel F. The vehicle 14 may be any desired vehicle, such as an agricultural vehicle in the form of a tractor 14.

Crop material may be lifted from windrows on the field into the baler 10 by a pickup unit 16. The pickup unit 16 includes a rotating pickup reel 18 with tine bars and tines 20, which move the crop rearward toward a variable bale chamber 22. The reel 18 is rotatable in an operating direction for lifting the crop material off of the ground and a reverse direction, i.e., opposite to the operating direction.

The bale chamber 22 is configured as a variable bale chamber 22 which includes multiple rolls or rollers 24, 26, such as various stationary rollers 24 and movable rollers 26, actuators and pivot arms coupled to the movable rollers 26, and at least one belt 28. The rollers 24, 26 may comprise a floor roller, starter roller, fixed roller(s), pivot roller(s), stripper roller, and/or follower roller(s). Together, the rollers 24, 26 and the belt(s) 28 create a round circulating chamber which expands in between an empty bale position and a full bale position for engaging and rolling the bale. As the bale grows inside the chamber 22 it begins to act upon the belts 28 such that the belts 28 pull against the pivot arms which in turn causes the movable rollers 26 to move upwardly so that the variable bale chamber 22 incrementally expands with the size of the bale. It should be understood that the invention is not limited to the particular details of the bale chamber, as the bale chamber may vary. Also, the baler is not limited to being a round baler. For example, the baler may be a small or large square baler.

When the bale reaches a predetermined size, the bale is wrapped with a wrapping material (e.g., mesh or twine) by a wrapper. Then, once fully wrapped, the bale is ejected out of the tail gate 12. The tail gate 12 may pivot upwardly about pivot axis 30 to open the bale chamber 22. Then, the bale rolls out of the bale chamber 22 and onto a bale ramp, accumulator, ejector or kicker 32, which urges the bale rearwardly away from the baler 10 so that the tail gate 12 may downwardly pivot unencumbered by the ejected bale.

The baler 10 can further include an electrical processing circuit 34, e.g. controller 34 with a memory 36, for conducting various baling procedures. For instance, the controller 34 can be configured for carrying out the bale discharge operation. Hence, the controller 34 may open the tail gate 12 via accompanying actuators upon sensing a full bale condition by a bale-size sensor (not shown). Controller 34 may communicate with the controller of tractor 14 in order, for example, to adjust the speed of tractor 14. Although controller 34 is shown as being associated with baler 10, it should be understood that controller 34 may be associated with tractor 14. Further details in connection with the baler 10 may be found in U.S. Patent No. 11,612,108.

As noted above, most round balers are towed by a tractor or other vehicle, and those round balers receive power from a power take-off (PTO) shaft extending from the tractor. In such an arrangement, the pickup unit rotates at a constant speed due to its connection to that PTO shaft. It would be desirable to operate the pickup unit (and/or other components of the baler) using a variable source of power in the interest of efficiency (fuel, time, crop throughput, etc.), controlling the shape of the bale, estimating the crop throughput of the baler (i.e., the amount of crop entering the baler to be processed by the baler), and more.

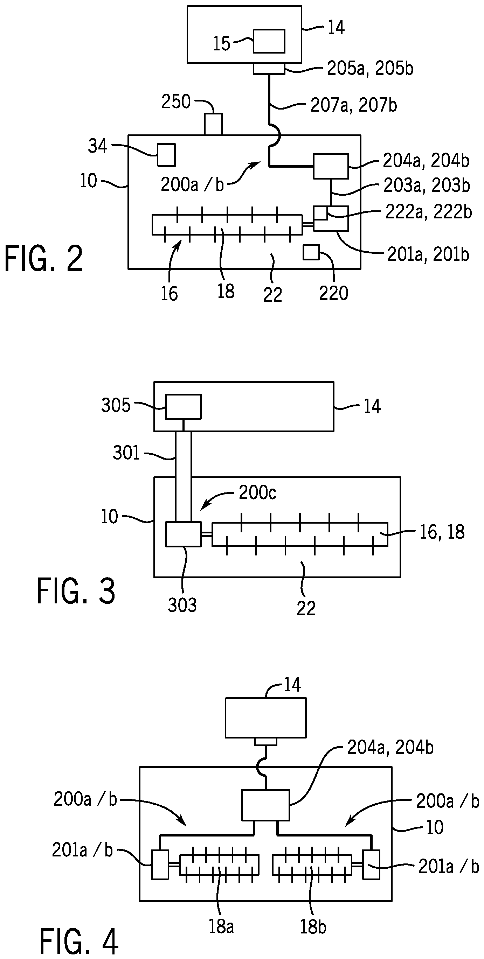

Turning now to FIGs. 2-4, the reel 18 of the pickup unit 16 may be powered by a variable-speed drive 200. Drive 200 can take multiple forms, and multiple variants of the drive 200 (i.e., 200a, 200b, 200c, etc., which may be referred to either individually or collectively as drive 200) are described hereinafter.

Turning specifically to FIG. 2, in which a variable-speed drive in the form of a hydraulically powered drive 200a is shown, drive 200a can include a hydraulic motor 201a which is capable of metering the power supplied to the pickup unit 16. Motor 201a receives the fluid flow from a pump 15, which may be located onboard the tractor 14, for example. Drive 200a may also include the fluid lines connected thereto as well as the circuitry for operating the motor 201a. The motor 201a may receive fluid power directly from a hydraulic line 203a. The line 203a fluidly connects the motor 201a to a fluid distributor 204a. Fluid distributor 204a may deliver power to a plurality of components of baler 10. Fluid distributor 204a is fluidly connected by a fluid line 207a to a remote hydraulic hookup 205a on tractor 14. The speed of motor 201a may be controlled by controller 34, as required. Alternatively, another controller, such as a controller on board the tractor 14, may be responsible for controlling the operation of motor 201a. It is noted that fluid distributor 204a is optional, and other means for delivering hydraulic fluid to motor 201a are envisioned.

As an alternative to hydraulically powered drive 200a, the drive 200 may be an electrically powered drive 200b. The drive 200b generally comprises an electric motor 201b that is connected by electric line 203b to a distributor 204b. Drive 200b may also include the electrical lines connected thereto as well as the circuitry for operating the motor 201b.

Distributor 204b may deliver power to various systems of baler 10. Distributor 204b is electrically connected by a line 207b to a remote electrical hookup 205b on tractor 14. The speed of motor 201b may be controlled by controller 34, as required. Controller 34 may be responsible for delivering power to motor 201b, as required. Alternatively, another controller, such as a controller on board the tractor 14, may be responsible for delivering power to motor 201b. It is noted that distributor 204b is optional, and other means for delivering electricity to motor 201b are envisioned.

Turning now to FIG. 3, as an alternative to a hydraulically or electrically powered drive 200, the drive 200c may be powered by (or comprise) the power take-off (PTO) shaft 301 of tractor 14. The drive 200c constitutes or forms part of a mechanical drive line. PTO shaft 301 is powered by a motor 305 of tractor. Motor 305 may also be responsible for driving the ground wheels of tractor 14. PTO shaft 301 may power the pickup unit 16 of the baler 10 in a variable manner. Shaft 301 could be a variable speed PTO shaft on the tractor, whereby the variable speed PTO shaft is connected to the pickup reel 18 by a power transmission device 303 in the form of a gear box, for example. The variable speed PTO shaft 301 is capable of metering the speed of the pickup unit 16 of the baler 10. The speed of shaft 301 may be adjusted using controls of the tractor 14.

Alternatively, if the PTO shaft 301 is a traditional constant speed PTO shaft and not a variable speed PTO shaft, then the power transmission device 303 may be a system-controlled clutch or a disconnect clutch that is configured for either permitting or preventing power to be transferred to unit 16. The controller 34 may be electrically connected to the clutch for controlling the clutch to meter the rotational speed of the reel 18 of the pickup unit 16. As another alternative, the power transmission device 303 may be a mechanical variator (such as disclosed in U.S. Patent No, 4,311,061), a friction disc, a hydraulic CVT transmission, etc. It is noted that the aforementioned devices could also be used with a variable-speed PTO shaft, if so desired.

Turning now to the first benefit flowing from using a variable-speed pickup unit drive 200, using a variable-speed pickup unit drive can result in various efficiencies in terms of fuel savings, time savings, reduced component wear, and maximizing crop throughput. In a traditional baler setup, the pickup unit rotates at a constant speed due to its connection to that PTO shaft, and the pickup unit runs continuously. For example, the traditional pickup unit continues to operate even when it is not required for operation during the wrapping and ejecting bales as well as when passing headland areas or between windrows. This traditional setup can result in parasitic loss of power, loss of fuel efficiency and increased wear on components. By using the variable-speed drive 200, the drive 200 operates the pickup unit 16 only as required thereby avoiding the aforementioned disadvantages associated with continuously operating the baler 10 at a constant speed.

The ability to activate or deactivate the drive 200 of the pickup unit 16 can be automated and based on a number of conditions including (i) activating drive 200 when a sensor, such as sensor 250, senses a windrow on the field, (ii) deactivating drive 200 when baler is wrapping and/or ejecting bales, and/or (iii) activating drive 200 when crop material is detected by a sensor associated with either baler 10 or tractor 14.

Turning now to the second benefit flowing from using a variable-speed pickup unit drive 200, the drive 200 can be used to adjust the shape of the bale while the bale is forming in the bale chamber 22. Most operators seek to produce a bale having a uniform circular cross-section. On the other hand, it may also be desirable to produce a bale having a non-uniform shape in order to prevent the bale from rolling away when placed on a hill. The drive 200 can be operated to adjust the cross-sectional shape of the bale to achieve either a uniform shape or a non-uniform shape, as desired. Stated differently, variable drive 200 can be used to impact the cross-sectional shape of a bale by either achieving or correcting for a non-round bale shape.

For an operator seeking to produce a bale having a uniform shape, as a first step, the controller 34 is operated to detect the bale shape based on the readings provided by one or more bale-shape sensors 220 (FIG. 2). Such bale shape sensors are described in U.S. Patent No. 9,585,310; 8,571,744; and 7,437,866, for example. Alternatively, the bale shape may be detected using a non-contact measurement method that senses the outer surface of the bale. As another alternative, and with reference to the embodiment of FIG. 4, which is described later, the bale shape may be detected through a comparison of the belt tension/stretch from the left to right sides of the baler, for example.

The circumferential shape of the bale can be adjusted by either speeding up or slowing down the pickup unit 16. By increasing the rotational speed of the pickup unit 16 for a brief moment in time, the additional crop flow (due to the increased speed) can be added to an undersized area of the bale thereby making the cross-sectional of the bale more uniform. The circumferential location of the undersized area of the bale is known as a result of the bale shape sensor 220, and, the increased speed of the pickup unit is timed such that the increased crop flow is coextensive with the known location of the undersized area of the bale. The time delay between increasing the speed of the pickup unit and the moment that the additional crop flow reaches the undersized area may be a known value that is derived from factory testing. It is also noted that by directly monitoring the rotation speed of the rollers 24/26, the linear speed of the belt 28, or the rotation of the crop material in the bale chamber 22, the speed changes of the pickup unit 16 can be timed in conjunction with the rotation of the bale. In this way, the bale shape can be improved during the period of time that the bale is being formed.

In a similar way, the bale shape can be intentionally made to be non-uniform (i.e., non-circular). In scenarios where bales are likely to roll down a hill, the pickup speed can be varied so that the bale can be intentionally shaped with two, three, or four bulbous portions on the outer surface of the bale. To produce these bulbous portions, the speed of the pickup unit is either increased or decreased at predetermined intervals.

With regard to the predetermined intervals, for a bale that is intended to have two lobes, the pickup might need to increase and then decrease speed twice within the time of one rotation of the bale. However, there may be instances where the pickup speed cannot be changed in a time period less than one rotation of the bale. In such an instance, the pickup could be timed by the controller 34 at a multiple of the desired frequency so that crop can be added at a greater/lesser rate to the outer surface of the bale on every second or third rotation of the bale, for example.

Turning now to FIG. 4, the right and left sides of the bale may be individually controlled to tailor the cross-sectional shape of the bale. To accomplish this task, the pickup reel 18 may be divided into two separate pickup reels 18a and 18b. Reels 18a and 18b, taken together, extend along the transverse width of the baler 10. Each reel 18a and 18b may be powered by a separate variable speed drive 200a/b. Each variable speed drive 200a may include a hydraulic motor 201a that is provided fluid by fluid distributor 204a, as described above with reference to FIG. 2. As another alternative, each variable speed drive 200b may include an electric motor 201b that is powered by a power distributor 204b, as described above with reference to FIG. 2.

The reels 18a and 18b can be separately controlled by the variable speed drives 200a/b to make the cross-sectional shape of the bale uniform. Specifically, the reels 18a and 18b can be either accelerated or decelerated, as required, to direct the crop material to specific locations on the left and/or right hand side of the bale.

Turning now to the third benefit flowing from using a variable-speed pickup unit drive 200, the drive 200 can be used to estimate crop throughput through the baler 10. The estimate may be used for various purposes including maximizing the efficiency of the baler 10, which ties into the aforementioned first benefit. The crop throughput may also be referred to as the amount of crop entering the baler to be processed (i.e., baled) by the baler.

Depending upon the type of variable drive(s) 200, the estimated crop throughput can be used to control operation of the pickup unit 16 (or other system of baler 10), the rotational speed of the PTO shaft 301 and/or the ground speed of tractor 14. The ground speed of tractor 14 could be changed, e.g., by increasing the engine speed of tractor 14, changing a transmission gearing or setting of tractor, etc.

As background, crop throughput plays an important role in the efficient baling operation. Baling operations are most efficient when the tractor can move through a field and maintain a relatively high load while baling. There is always some amount of "overhead" operating costs to operate a tractor and baler in terms of fuel usage, ground compaction, operator wage. The goal is to bale as much crop material as possible relative to those costs, i.e., minimize the time spent in the field, minimize the number of passes driven over the field, and maximize the rate at which the crop is packaged into a bale (throughput).

Traditionally, throughput of a round baler is estimated by weighing the finished bale and/or utilizing the LIDAR data, for example, to measure volume of crop going into the baler. Weighing the finished bale only provides useful data after the bale is formed and the LIDAR data provides no indication of crop density, and can be costly and subject to dust interference.

Independently driving the reel 18 using the variable drive 200 allows for the load on the pickup unit 16 to be measured separately from other systems of the baler 10. For example, if the drive 200 is an electric drive 200b, the current draw of the motor 201b can be calculated using a sensor 222b. Although sensor 222b is shown associated with motor 201b, it should be understood that the position of sensor 222b can vary. For example, sensor 222b may be either directly or indirectly connected to line 207b and located within tractor 14. The crop throughput can be calculated or estimated using a pre-determined correlation between crop throughput and the measured current draw. The correlation may be saved in a look-up table, for example. The correlation may be linear and/or calculated by a processor.

Alternatively, if the drive 200 is a hydraulic drive 200a, a torque load can be calculated by measuring the hydraulic pressure using a sensor 222a that is located in the fluid circuit that provides flow to the pickup unit 16. Sensor 222a may be located upstream of the motor 201a to measure the pressure that is formed in the input line 203a due to the resistance of the pickup unit 16 to rotate. Another sensor may also be located downstream of the motor so that a pressure drop across the motor 201a can be calculated. In some cases, a sufficiently accurate measurement can be achieved by assuming that the outlet of the motor 201a has a low fixed pressure.

Power can be calculated based upon the calculated torque load. Finally, crop throughput can be calculated or estimated based on the calculated power. The correlation may be saved in a look-up table or calculated by a processor.

The following formulas may be used to calculate torque and power for a hydraulic drive 200a.

$$Equation\ 1:\ Torque = Pressure * Displacement / (2*pi)$$

$$Equation\ 2:\ Power = Torque * Speed / 63{,}025,$$

where the Power is calculated in horsepower (HP), Torque is in units of lb-in., and Speed is the speed of the motor in units of rpm. The Speed may be the maximum rated speed of the motor, which is a known quantity.

Once Power is calculated, that value can be used to compare relative throughput from one portion of the field to another. It is also possible to use an alternative on-the-go style calibration that could be implemented using bale weight information (e.g., on-board scale or external user input measured by transporting the bale(s)) to calibrate relative yield maps for fields that were already baled. Also, as an alternative to using Equation 1, the mechanical drive of the pickup 16 may include torque and/or speed sensors.

Baler 10 includes a feedrate control system that utilizes the above-described measured or estimated crop throughput to control operation of the pickup unit 16 (or other system of baler 10), the rotational speed of the PTO shaft 301 and/or the ground speed of tractor 14, depending upon the type of variable drive(s) 200 employed. The feedrate control system may constitute the controller of the baler and/or the tractor, for example.

As background to the need for a feedrate control system, in a round baling operation, operators often push to drive as fast as they can to form a bale quickly which can result in plugging of the baler. Alternatively, some operators may operate slowly to avoid plugging and miss the opportunity to improve their efficiency by speeding up when baling low-volume sections of crop. Both of these scenarios could be improved by implementing a feed rate control system that uses the above-described estimated crop throughput to control operation of the pickup unit 16 (or other system of baler 10), the rotational speed of the PTO shaft 301 and/or the ground speed of tractor 14, depending upon the type of variable speed drive(s) 200.

Operation of the pickup unit 16 (or other system of baler 10), the rotational speed of the PTO shaft 301 and/or the ground speed of tractor 14 can be controlled to promote optimal bale formation and increased field efficiency using the above-described estimated crop throughput. The above-described estimated crop throughput may be used to perform any one of the following functions: (a) increase the ground speed of tractor 14 if the estimated crop throughput is below a threshold value; (b) control the rotational speed of variable-speed PTO shaft 301 based upon a look-up table or algorithm correlating the estimated crop throughput to the rotational speed; (c) control the speed of motor 201a based upon a look-up table or algorithm correlating the estimated crop throughput to the motor speed; and/or (d) control the speed of motor 201a based upon the detected ground speed of tractor 14 to achieve an optimal relationship therebetween (using a feedrate control algorithm would cause the pickup speed to increase with throughput because the tractor will be driven at a higher speed to achieve higher throughput).

As an alternative or in addition to using the variable drive(s) 200 to estimate crop throughput, LIDAR or other type of non-contact sensor 250 (FIG. 1) may be positioned at the front of either baler 10 or tractor 14 to detect the size/shape of the incoming swath. And, that crop throughput measured by the sensor may be used in any of the functions (a) through (d) described above.

It is to be understood that the above-described operating steps are performed by the controllers described above upon loading and executing software code or instructions which are tangibly stored on a tangible computer readable medium, such as on a magnetic medium, e.g., a computer hard drive, an optical medium, e.g., an optical disc, solid-state memory, e.g., flash memory, or other storage media known in the art. Thus, any of the functionality performed by the controller described herein, such as the aforementioned method of operation, is implemented in software code or instructions which are tangibly stored on the tangible computer readable medium. Upon loading and executing such software code or instructions by the controller, the controller may perform any of the functionality of the controller described herein, including any steps of the aforementioned method described herein.

The term "software code" or "code" used herein refers to any instructions or set of instructions that influence the operation of a computer or controller. They may exist in a computer-executable form, such as machine code, which is the set of instructions and data directly executed by a computer's central processing unit or by a controller, a human-understandable form, such as source code, which may be compiled in order to be executed by a computer's central processing unit or by a controller, or an intermediate form, such as object code, which is produced by a compiler. As used herein, the term "software code" or "code" also includes any human-understandable computer instructions or set of instructions, e.g., a script, that may be executed on the fly with the aid of an interpreter executed by a computer's central processing unit or by a controller.

While this invention has been described with respect to at least one embodiment, the present invention can be further modified within the scope of the appended claims. For example, although the variable speed drives have been described for use with a pickup unit of a baler, the variable speed drives can be used to control any component of the baler.

Features of the different variants and embodiments described herein may be combined in any way with one another.

## Claims

**1.** An agricultural baler (10) comprising:

a pickup unit (16) comprising a rotatable reel (18) for introducing crop material into a baling chamber (22) of the baler (10); and

a variable speed drive system (200) for rotating the reel (18).

2. The agricultural baler (10) of claim 1, wherein the variable speed drive system (200a) comprises a hydraulic motor (201a) having an output shaft (301) that is connected to the reel (18) for rotation of the reel (18).

3. The agricultural baler (10) of claim 2, wherein the hydraulic motor (201a) is fluidly connected to a fluid distributor (204a) that is configured to be fluidly connected to a pump (15) on a tractor (14) for driving the baler (10).

4. The agricultural baler (10) of claim 2 further comprising one or more sensors (222a) for measuring a hydraulic pressure of a fluid within a hydraulic circuit to which the hydraulic motor (201a) is connected.

5. The agricultural baler (10) of claim 4 further comprising a controller (34) for calculating a value indicative of an amount of crop entering the baler (10) at the pickup unit (16) based on the measured hydraulic pressure.

6. The agricultural baler (10) of claim 5, wherein the controller (34) is configured to adjust a speed of the variable speed drive system (200) as a function of the calculated value.

7. The agricultural baler (10) of claim 1, wherein the variable speed drive system (200b) comprises an electric motor (201b) having an output shaft (301) that is connected to the reel (18) for rotation of the reel (18).

8. The agricultural baler (10) of claim 7, wherein the electric motor (201b) is configured to be electrically connected to an electrical port on a tractor (14) for driving the baler (10).

9. An agricultural vehicle comprising the agricultural baler (10) of claim 8, wherein the vehicle includes a sensor (222b) for measuring a current draw of the electric motor (201b).

10. The agricultural vehicle of claim 9 further comprising a controller (34) for calculating a value indicative of an amount of crop entering the baler (10) at the pickup unit (16) based on the measured current draw.

11. The agricultural vehicle of claim 10, wherein the controller (34) is configured to adjust a speed of the variable speed drive system (200) as a function of the calculated value.

12. The agricultural baler (10) of claim 1, wherein the variable speed drive system (200) for rotating the reel (18) comprises (i) a motor (305) or shaft (301) that is connected to the reel (18) for rotating the reel (18), and (ii) a clutch connected to the motor (305) or shaft (301) that is configured for selectively activating and deactivating the motor (305) or shaft (301).

13. The agricultural baler (10) of claim 1 further comprising a controller (34) for controlling the variable speed drive system (200b), wherein the controller (34) is configured to deactivate the variable speed drive system (200b) when the baler (10) is travelling through a headland or between windrows.

14. An agricultural vehicle comprising the agricultural baler (10) of claim 1, wherein the agricultural baler (10) is mounted to a hitch on the agricultural vehicle.

FIG. 1

FIG. 2

FIG. 3

FIG. 4

## EUROPEAN SEARCH REPORT

Europäisches Patentamt
European Patent Office
Office européen des brevets

**Application Number**

EP 24 21 8827

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 20 2011 001967 U1 (KVERNELAND ASA [NO]) 24 March 2011 (2011-03-24) * paragraphs [0028], [0009], [0014], [0019], [0033], [0041], [0011], [0012]; figure 1 * | 1-11,13, 14 | INV. A01D89/00 |
| X | US 2012/222565 A1 (HERRON MAYNARD M [US] ET AL) 6 September 2012 (2012-09-06) | 1-4, 12-14 | |
| Y | * paragraphs [0031], [0036], [0043], [0052], [0038]; figures 1, 2 * | 5,6 | |
| X | US 2021/176922 A1 (RIVERA FRANCISCO [US]) 17 June 2021 (2021-06-17) * paragraph [0030]; figure 1 * | 1,7-9, 13,14 | |
| Y | EP 1 982 574 A1 (POETTINGER OHG ALOIS [AT]) 22 October 2008 (2008-10-22) * paragraph [0025] * | 5,6 | |
| X | EP 3 818 810 A1 (CNH IND BELGIUM NV [BE]) 12 May 2021 (2021-05-12) * paragraphs [0019], [0113]; figure 1 * | 1,12-14 | |

|  |  |
|---|---|
| | TECHNICAL FIELDS SEARCHED (IPC) |
| | A01D A01F |

The present search report has been drawn up for all claims

| Place of search | Date of completion of the search | Examiner |
|---|---|---|
| Munich | 1 April 2025 | Karstens, Thede |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 8827

This annex lists the patent family members relating to the patent documents cited in  the above-mentioned European search report.
The members are as contained in the European Patent Office EDP file on
The European Patent Office is in no way liable for these particulars which are merely given for the purpose of information.

01-04-2025

| Patent document cited in search report | Publication date | Patent family member(s) | Publication date |
|---|---|---|---|
| DE 202011001967 U1 | 24-03-2011 | NONE | |
| US 2012222565    A1 | 06-09-2012 | BR  112012002218 A2 | 31-05-2016 |
| | | CN     102781219 A | 14-11-2012 |
| | | EP      2458965 A2 | 06-06-2012 |
| | | US    2011023442 A1 | 03-02-2011 |
| | | US    2012222565 A1 | 06-09-2012 |
| | | WO    2011012960 A2 | 03-02-2011 |
| US 2021176922    A1 | 17-06-2021 | NONE | |
| EP 1982574       A1 | 22-10-2008 | AT      E496529 T1 | 15-02-2011 |
| | | DE 102007018321 A1 | 23-10-2008 |
| | | EP      1982574 A1 | 22-10-2008 |
| | | EP      2248411 A2 | 10-11-2010 |
| | | EP      2308281 A2 | 13-04-2011 |
| EP 3818810       A1 | 12-05-2021 | EP      3818810 A1 | 12-05-2021 |
| | | US    2021137020 A1 | 13-05-2021 |

EPO FORM P0459

For more details about this annex : see Official Journal of the European Patent Office, No. 12/82

**REFERENCES CITED IN THE DESCRIPTION**

**Patent documents cited in the description**

- US 11612108 B
- US 4311061 A
- US 9585310 B
- US 8571744 B
- US 7437866 B